(19) Europäisches Patentamt
European Patent Office
Office européen des brevets

(11) **EP 2 108 962 A2**

(12) **EUROPÄISCHE PATENTANMELDUNG**

(43) Veröffentlichungstag:
**14.10.2009 Patentblatt 2009/42**

(51) Int Cl.:
*G01P 3/36* [(2006.01)]     *G01P 3/50* [(2006.01)]
*G01S 17/58* [(2006.01)]

(21) Anmeldenummer: **09004938.8**

(22) Anmeldetag: **03.04.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **11.04.2008   DE 102008018605**
**12.08.2008   DE 102008038616**

(71) Anmelder: **Continental Teves AG & Co. oHG**
**60488 Frankfurt (DE)**

(72) Erfinder:
• **Neitzel, Bernd**
**63263 Neu-Isenburg (DE)**
• **Otto, Artur**
**61267 Neu-Anspach (DE)**

• **Groitsch, Stephan**
**69469 Weinheim (DE)**
• **Münch, Holger**
**8291 BM Vaals (NL)**
• **Carpaij, Mark**
**52062 Aachen (DE)**
• **Van der waal, Robert**
**8585 AZ Mook (NL)**

(74) Vertreter: **Büchner, Jörg**
**Conti Temic microelectronic GmbH**
**Patente & Lizenzen**
**Sieboldstraße 19**
**90411 Nürnberg (DE)**

(54)   **Vorrichtung und Verfahren zum Ermitteln der Geschwindigkeit eines Sportlers**

(57)    Die Erfindung betrifft eine Vorrichtung zum Fixieren an einem Sportgerät und/oder Sportler. Der Vorrichtung umfasst wenigstens eine Lasereinheit mit einer Lichtquelle zum Emittieren eines kohärenten Messlichtstrahls in Richtung einer Oberfläche, und einem Interferenz-Detektor, der dazu ausgebildet ist, eine Messgröße zu erfassen, die eine Interferenz zwischen dem an der Oberfläche gestreuten Messlichtstrahl und dem Licht der Lichtquelle charakterisiert, und eine Auswerteeinrichtung zum Bestimmen eine Geschwindigkeit des Sportlers (101) in Abhängigkeit von der erfassten Messgröße. Ferner umfasst die Erfindung ein Verfahren zur Bestimmun der Geschwindigkeit eines Sportlers.

Fig. 1

EP 2 108 962 A2

**Beschreibung**

**Technisches Gebiet**

Die Erfindung bezieht sich auf die Erfassung der Geschwindigkeit eines Sportlers. Insbesondere betrifft die Erfindung eine Vorrichtung zum Erfassen einer Geschwindigkeit eines Sportlers und ein Verfahren zum Erfassen einer Geschwindigkeit eines Sportlers. Die Vorrichtung umfasst einen Sensor, der sich insbesondere zur Befestigung an einem Sportler und/oder zur Befestigung an einem Sportgerät des Sportlers eignet.

**Hintergrund der Erfindung**

Bei Spitzensportlern sowie bei Freizeitsportlem besteht ein großes Bedürfnis nach einer Leistungsdiagnostik. Diese umfasst die Kontrolle von Körperfunktionen, wie beispielsweise der Pulsfrequenz, die mit entsprechenden Pulsfrequenzmessern erfasst werden kann. Derartige Pulsfrequenzmesser können von dem Sportler in der Regel bei seiner sportlichen Aktivität mitgeführt werden, um eine Echtzeitauswertung vorzunehmen. Neben der Kontrolle der Körperfunktionen besteht zudem sowohl bei Spitzensportlern als auch bei Freizeitsportlem ein Bedarf, die eigene Leistung einer Bewertung zu unterziehen. Eine für eine derartige Bewertung geeignete Größe ist bei einer Vielzahl von Sportarten die Geschwindigkeit des Sportlers, insbesondere die Geschwindigkeit, die er über einem Untergrund erreicht, und/oder eine zurückgelegte Wegstrecke. Beim Fahrradfahren können diese Größen beispielsweise mittels eines Fahrradtachometers aus der Raddrehzahl bestimmt werden. Bei anderen Sportarten, wie beispielsweise Joggen, Inline-Skating, alpiner Skilauf oder Skilanglauf können insbesondere berührungslose Messmethoden eingesetzt werden. Eine nach einer derartigen Messmethode arbeitende Vorrichtung wird in der DE 19914 486 C1 beschrieben. Die Vorrichtung umfasst einen Ultraschall-oder Mikrowellensensor, der ein Signal mit einer festen Frequenz in einem Winkel auf eine Oberfläche abstrahlt. Von dem Sensor wird ein reflektiertes Signal erfasst, welches gegenüber dem ursprünglichen Signal aufgrund der Bewegung des Sportlers eine Doppler-Verschiebung aufweist, die zur Ermittlung der Geschwindigkeit herangezogen wird.

Bei Verwendung von Ultraschallwellen wird die Geschwindigkeitsmessung insbesondere aufgrund der kegelförmigen Ausbreitung der Ultraschallwellen relativ ungenau. Diese gilt insbesondere, wenn die Ultraschallwellen teilweise an Hindemissen in der Nähe des Sportlers reflektiert werden und nicht an der Oberfläche, auf der sich der Sportler bewegt. Ähnliche Probleme bestehen ebenfalls bei der Verwendung von Mikrowellen.

**Darstellung der Erfindung**

Daher ist eine Aufgabe der vorliegenden Erfindung, eine Vorrichtung bereitzustellen, mit der sich die Geschwindigkeit eines Sportlers genauer bestimmen lässt.

Die Aufgabe wird durch einen Vorrichtung mit den Merkmalen des Patentanspruchs 1 und durch ein Verfahren mit den Merkmalen des Patentanspruchs 15 gelöst. Ausführungsformen der Vorrichtung und des Verfahrens sind in den abhängigen Ansprüchen angegeben.

Gemäß einem ersten Aspekt der Erfindung wird eine Vorrichtung zum Fixieren an einem Sportgerät und/oder Sportler vorgeschlagen. Die Vorrichtung umfasst wenigstens eine Lasereinheit mit einer Lichtquelle zum Emittieren eines kohärenten Messlichtstrahls in Richtung einer Oberfläche, wenn die Lasereinheit (108a,b; 402a,b,c) an dem Sportler und/oder Sportgerät fixiert ist, und einem Interferenz-Detektor, der dazu ausgebildet ist, eine Messgröße zu erfassen, die eine Interferenz zwischen dem an der Oberfläche gestreuten Messlichtstrahl und dem Licht der Lichtquelle charakterisiert. Ferner umfasst die Vorrichtung eine Auswerteeinrichtung zum Bestimmen einer Geschwindigkeit des Sportlers in Abhängigkeit von der erfassten Messgröße.

Gemäß einem zweiten Aspekt der Erfindung wird ein Verfahren zum Bestimmen der Geschwindigkeit eines Sportlers vorgeschlagen, bei dem

- aus einer Lichtquelle einer Sensoreinrichtung ein kohärenter Messlichtstrahl in Richtung einer Oberfläche ausgesandt wird, der an der Oberfläche reflektiert wird,
- mit einem Interferenz-Detektor eine Messgröße erfasst wird, die eine Interferenz zwischen dem an der Oberfläche gestreuten Messlichtstrahl und dem Licht der Lichtquelle charakterisiert, und
- nach Maßgabe der Messgröße eine Geschwindigkeit des Sportlers bestimmt wird.

Durch das optische Messverfahren, das unter Verwendung von Laserlicht durchgeführt, wird eine sehr genaue Ermittlung der Geschwindigkeit des Sportlers ermöglicht. Insbesondere kann das Laserlicht fokussiert werden, so dass eine kegelförmige Ausbreitung verhindert werden kann.

Unter der Geschwindigkeit des Sportlers wird dabei insbesondere die Geschwindigkeitskomponente des Sportlers in Bewegungsrichtung parallel zu der Oberfläche verstanden, d.h., die Geschwindigkeit des Sportlers über Grund. Das von der Lichtquelle in Richtung der Oberfläche ausgesendete Licht wird zumindest teilweise zu der Lichtquelle zurückgestreut.

Um einen kompakten und unkomplizierten Aufbau der Sensoreinrichtung zu erreichen, ist der Ort der Interferenz daher vorzugsweise die Lichtquelle, insbesondere ein Laserresonator der Lichtquelle. Eine derartige Interferenz führt zu einer Veränderung des Betriebszustands des Lasers, der mit einem Detektor erfasst werden kann. Dies wird auch als Self-Mixing-Effekt bezeichnet.

Bei einer Ausgestaltung der Vorrichtung und des Verfahrens ist vorgesehen, dass es sich bei der Oberfläche um die Oberfläche eines Untergrunds handelt, auf dem sich der Sportler bewegt.

Ein Vorteil dieser Ausgestaltung besteht darin, dass die Geschwindigkeit des Sportlers relativ zu dem Untergrund bestimmt werden kann, auf dem er sich bewegt, wie insbesondere einer Laufbahn, einer Skipiste oder dergleichen.

Eine Weiterbildung der Vorrichtung und des Verfahrens zeichnet sich dadurch aus, dass eine Sensoreinrichtung mit zwei Lasereinheiten vorgesehen ist, die Messlichtstrahlen in unterschiedliche Richtungen emittieren, wobei die Auswerteeinrichtung dazu eingerichtet ist, die Geschwindigkeit des Sportlers aus den erfassten Messgröße der Lasereinheiten zu bestimmen.

Vorteilhaft sieht diese Weiterbildung die Verwendung von zwei Lasereinheiten vor, die jeweils einen Messlichtstrahl emittieren. Dies ermöglicht es insbesondere, die Winkel zwischen den Messlichtstrahlen und der Oberfläche zu bestimmen, die für die Ermittlung der Geschwindigkeit des Sportlers herangezogen werden und sich bei einer Bewegung des Sportlers im Allgemeinen verändern können. Hierdurch wird die Genauigkeit der Geschwindigkeitsbestimmung verbessert.

Insbesondere sieht dabei eine verbundene Ausgestaltung der Vorrichtung und des Verfahrens vor, dass die Auswerteeinrichtung dazu ausgebildet ist, die Geschwindigkeit des Sportlers in Abhängigkeit von der in einer Lasereinheit erfassten Messgröße und einer Winkelgröße zu ermitteln, die aus den in beiden Lasereinheiten erfassten Messgrößen gewonnen wird und einem Winkel zwischen wenigstens einem Messlichtstrahl und der Oberfläche charakterisiert.

Grundsätzlich kann der Messlichtstrahl einer Lasereinheit in zwei unabhängigen Drehrichtungen gegenüber der Oberfläche geneigt sein, so dass im Allgemeinen zwei Winkelgrößen für diesen Messlichtstrahl bestimmt werden müssten, um eine fehlerfrei Geschwindigkeitsmessung zu gewährleisten. In einer Ausführungsform der Vorrichtung und des Verfahrens wird dies dadurch umgangen, dass

Die Messlichtstrahlen sind in einer Ausgestaltung in einer Ebene angeordnet sind, die im Wesentlichen rechtwinklig zu der Oberfläche ausgerichtet ist. Ferner ist die Ebene vorzugsweise parallel zur Bewegungsrichtung des Sportlers ausgerichtet. Eine derartige Anordnung der Messlichtstrahlen kann beispielsweise durch eine geeignete Befestigung der Lasereinheiten an dem Sportgerät und/oder dem Sportler erreicht werden.

Eine weitere Ausführungsform der Vorrichtung und des Verfahrens sieht vor, dass eine Sensoreinrichtung mit mehreren, insbesondere drei Lasereinheiten vorgesehen ist, wobei die Frequenzen des von den Lasereinheiten emittierten Lichts nach einem Modulationsschema derart modulierbar sind, dass aus der erfassten Messgröße jeweils eine Entfernung ermittelbar ist, und wobei die Auswerteeinheit dazu ausgebildet ist, basierend auf den ermittelten Entfernungen wenigstens einen Drehwinkel der Sensoreinrichtung relativ zu der Oberfläche zu bestimmen.

Vorteilhaft nutzt diese Ausführungsform die Möglichkeit, aus den mittels der Lasereinheiten der Sensoreinrichtung ermittelten Entfernungen die Lage der Sensoreinrichtung relativ zu der Oberfläche zu bestimmen. Auf eine vorgegebene Ausrichtung der Laserstrahlen kann in dieser Ausführungsform verzichtet werden, wodurch die Verwendung der Vorrichtung für den Sportler vereinfacht wird.

Eine verbundene Ausgestaltung der Vorrichtung und des Verfahrens zeichnet sich dadurch aus, dass die Frequenzen des von den Lasereinheiten emittierten Lichts nach einem Modulationsschema derart modulierbar sind, dass aus der erfassten Messgröße jeweils neben der Entfernung eine Geschwindigkeitskomponente der Sensoreinrichtung ermittelbar ist.

Ein Vorteil dieser Ausgestaltung ist darin zu sehen, dass neben den Entfernungen zwischen der Sensoreinrichtung und der Oberfläche auch Geschwindigkeitskomponenten der Sensoreinrichtung relativ zu der Oberfläche ermittelt werden können. Dies lässt sich durch ein geeignetes Modulationsschema erreichen und ermöglicht die Bestimmung der zu ermittelnden Geschwindigkeit des Sportlers.

Eine weitere verbundene Ausgestaltung der Vorrichtung und des Verfahrens ist dadurch gekennzeichnet, dass die Auswerteeinrichtung dazu ausgestaltet ist, basierend auf der Geschwindigkeitskomponente der Sensoreinrichtung und dem Drehwinkel die Geschwindigkeit des Sportlers zu bestimmen.

Neben der Geschwindigkeit des Sportlers ist die zurückgelegte Wegstrecke eine interessante Größe zur Bewertung der Leistung des Sportlers. Eine Weiterbildung der Vorrichtung und des Verfahrens beinhaltet daher, dass die Auswerteeinrichtung dazu ausgebildet ist, durch eine Integration der ermittelten Geschwindigkeit des Sportlers über die Zeit eine von dem Sportler zurückgelegte Wegstrecke zu bestimmen.

Vorteilhaft ermöglicht es die Erfindung in einer Ausgestaltung, die ermittelte Geschwindigkeit des Sportlers und/oder die Wegstrecke zur Anzeige zu bringen, so dass sie von dem Sportler eingesehen werden kann. Diese Ausgestaltung der Vorrichtung und des Verfahrens ist dadurch gekennzeichnet, dass die Auswerteeinrichtung mit einer Ausgabeeinrichtung zum Ausgeben der ermittelten Geschwindigkeit des Sportlers und/oder der ermittelten Wegstrecke verbindbar ist.

Eine verbundene Ausführungsform der Vorrichtung und des Verfahrens sieht vor, dass es sich bei der Verbindung um eine Funkverbindung handelt.

Vorteilhaft wird hierbei anhand der Funkverbindung eine einfache Anbindung der Anzeigeeinrichtung an die Auswerteeinrichtung ermöglicht, die für den Sportler bequem zu handhaben ist. Insbesondere müssen für die Anbindung keine Kabel vorgesehen werden, welche den Sportler bei seinen Bewegungen stören könnten.

Darüber hinaus ist es bei einer Ausführungsform der Vorrichtung und des Verfahrens vorgesehen, dass die Lasereinheiten und die Auswerteeinheit in einem Gehäuse angeordnet sind, das dazu ausgebildet ist, an dem Sportler und/oder an dem Sportgerät fixiert zu werden.

Ein Vorteil dieser Ausführungsform besteht darin, dass die Lasereinheiten der Sensoreinrichtung und die Auswerteeinrichtung in einem gemeinsamen Gehäuse angeordnet sind, woraus ein kompakter und kostengünstiger Aufbau der Sensoreinrichtung resultiert. Ferner kann die Sensoreinrichtung in dieser Ausgestaltung besonders einfach am Sportler oder an einem Sportgerät des Sportlers montiert werden, da nicht jede Lasereinheit einzeln angebracht und ausgerichtet zu werden braucht.

Ferner beinhaltet eine Ausgestaltung der Vorrichtung und des Verfahrens, dass die Anzeigeeinrichtung eine Anzeigeeinrichtung umfasst sowie ein Befestigungsmittel, mit dem sie im Blickfeld des Sportlers an dem Sportler und/ oder dem Sportgerät befestigt werden kann.

In dieser Ausgestaltung kann die Anzeigeeinrichtung von dem Sportler mitgeführt werden, so dass dieser fortwährend die ermittelte Geschwindigkeit und/oder die Wegstrecke einsehen kann.

Gleichfalls kann die Anzeigeeinrichtung jedoch eine stationäre Anzeigeeinrichtung umfassen. Bei der stationären Anzeigeeinrichtung kann es sich insbesondere um eine Anzeigetafel handeln, auf der die ermittelte Geschwindigkeit und/oder die Wegstrecke Zuschauern einer Sportveranstaltung dargestellt wird, an welcher der Sportler teilnimmt.

Darüber hinaus beinhaltet die Erfindung eine Sportausrüstung, die eine Vorrichtung der zuvor beschriebenen Art umfasst. Bei der Sportausrüstung kann es sich insbesondere um ein Sportgerät mit daran befestigter Sensoreinrichtung handeln und/oder um einen oder mehrere zusätzliche Sportausrüstungsgegenstände, die der Sportler bei seiner sportlichen Aktivität mit sich führt. Ferner beinhaltet die Erfindung die Verwendung einer Vorrichtung der zuvor beschriebenen Art zum Ermitteln der Geschwindigkeit eines Sportlers.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

## Kurze Beschreibung der Figuren

Von den Figuren zeigt:

Fig. 1 eine schematische Darstellung eines Sportlers mit einer Sensoreinrich- tung zum Erfassen der Geschwindigkeit des Sportlers,

Fig. 2 eine schematische Veranschaulichung der Sensoreinrichtung zum Erfas- sen der Geschwindigkeit des Sportlers,

Fig. 3 eine schematische Darstellung zur Veranschaulichung des Funktions- prinzips einer erfindungsgemäßen Sensoreinrichtung,

Fig. 4 eine schematische Darstellung einer Sensoreinrichtung in einer weiteren Ausführungsform,

Fig. 5 ein Diagramm mit einer prinzipiellen Darstellung des zeitlichen Verlaufs einer modulierten Frequenz des von einer Lasereinheit emittierten Lichts

## Darstellung von Ausführungsbeispielen

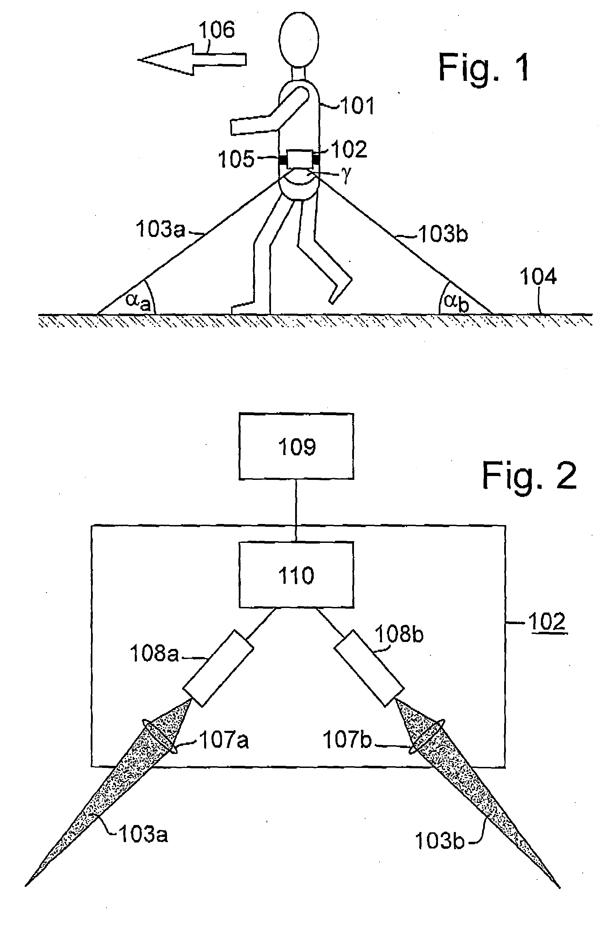

In Figur 1 ist beispielhaft ein Sportler 101 dargestellt, der sich über einer Oberfläche 104 in eine Bewegungsrichtung 106 bewegt. Der Sportler trägt einen Sensor 102, von dem zwei Messlichtstrahlen 103a,b in Richtung der Oberfläche 104 emittiert werden, wo sie jeweils unter einem Winkel $\alpha_a$ und $\alpha_b$ auftreffen. Die Messlichtstrahlen 103a, b sind in einer Ebene angeordnet, und zwischen den Strahlen besteht der Winkel $\gamma$. Der Winkel $\gamma$ ist in einer Ausgestaltung ein fester, konstruktiv bedingter Parameter, während sich die Winkel $\alpha_a$ und $\alpha_a$ aufgrund von Bewegungen des Sportlers 101 verändern.

In der beispielhaften Ausgestaltung, die in Figur 1 veranschaulicht ist, ist der Sensor 102 mit einem Gürtel 105 seitlich am Oberkörper des Sportlers 101 angebracht, bei dem es sich um einen Läufer bzw. Jogger handelt. In gleicher Weise kann der Sensor jedoch auch bei der Durchführung anderer Sportarten am Sportler 101 befestigt werden. So kann der Sensor beispielsweise beim Inline-Skaten, beim alpinen Skilauf oder Skilanglauf, beim Radfahren, beim Reiten oder auch bei Wassersportarten, wie etwa Surfen oder Windsurfen, sowie bei weiteren Sportarten eingesetzt werden. Anstelle einer Befestigung mittels des Gürtels 105 kann grundsätzlich auch jede andere geeignete Befestigung verwendet werden. Insbesondere kann der Sensor auch an einem Sportgerät bzw. einem anderen Sportausrüstungsgegenstand des Sportlers 101 angebracht werden. Insbesondere kann es bei einem Skiläufer beispielsweise vorgesehen sein, dass der Sensor lösbar oder fest mit den Skischuhen oder den Skiern verbunden ist. Bei einem Radfahrer kann es beispielsweise vorgesehen sein, den Sensor lösbar oder fest mit dem Fahrrad zu verbinden, und beim Reiter kann der Sensor auch am Pferd oder am Sattel des Pferdes befestigt werden. Insoweit ist die in Figur 1 veranschaulichte Ausgestaltung rein beispielhaft zu verstehen.

Vorzugsweise wird die jeweilige Befestigung so gewählt, das beide Messlichtstrahlen 103a,b bei dem bestehenden Winkel $\gamma$ die Oberfläche 104 erreichen, über der sich der Sportler 101 bewegt, und nicht durch Hindernisse im Strahlengang abgeschirmt werden. Ferner ist es vorteilhaft, die Befestigung des Sensors 101 so zu wählen, dass die Ebene, in der sich die Messlichtstrahlen 103a,b befinden, möglichst rechtwinkelig zu der Oberfläche 104 und parallel zur Bewegungsrichtung 106 ausgerichtet ist.

In Figur 2 ist eine schematische Darstellung des Sensors 102 gezeigt. Dieser umfasst zwei Lasereinheiten 108a,b, die jeweils einen aus kohärentem Licht bestehenden Messlichtstrahl 103a,b aussenden, der durch ein optisches Element 107a,b gebündelt wird, das eine geeignete Anordnung mit optischen Linsen beinhaltet. Der Messlichtstrahl 103a,b einer Lasereinheit 108a,b wird durch kohärentes Licht gebildet und beispielsweise in einem Halbleiterlaser erzeugt, der beispielsweise als ein Vertical Cavity Surface Emitting Laser (VCSEL) ausgestaltet sein kann. Das Licht liegt vorzugsweise in einem unsichtbaren, insbesondere im infraroten Spektralbereich, so dass die Messlichtstrahlen 103a,b nicht sichtbar sind und andere Personen nicht stören bzw. irritieren. Alternativ kann jedoch auch Licht in einem anderen Spektralbereich erzeugt werden. In den Lasereinheiten 108a,b werden Messsignale erfasst, die einer mit den Lasereinheiten 108a,b, verbundenen Auswerteeinrichtung 110 zugeführt werden.

Bei der Auswerteeinrichtung 110 handelt es sich um eine elektronische Recheneinheit, die über einen Mikroprozessor zur Durchführung von Berechnungen verfügt und einen nichtflüchtigen Speicher aufweist, in dem Algorithmen und Parameter für die Durchführung der Berechnungen gespeichert sind. Die Auswerteeinrichtung 110 ist neben den Lasereinheiten 108a,b Bestandteil des Sensors 102 und vorzugsweise mit den Lasereinheiten 108a,b in dem Gehäuse des Sensors 102 integriert.

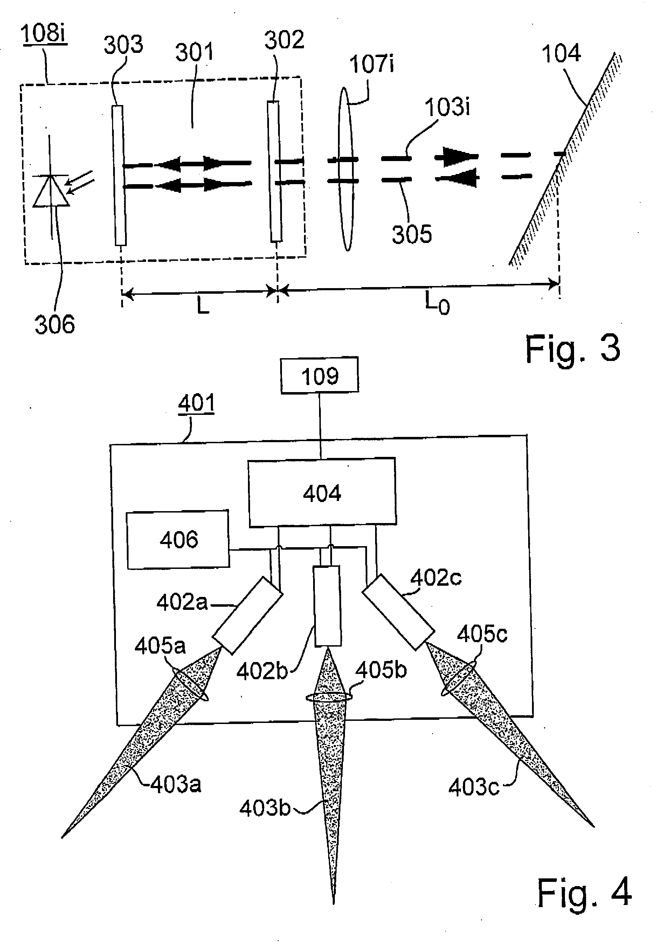

Die grundsätzliche Funktionsweise der Lasereinheiten 108a,b wird beispielhaft anhand von Figur 3 für eine Lasereinheit 108i veranschaulicht, die exemplarisch für beide Lasereinheiten 108a,b des Sensors 102 steht. Die Lasereinheit 108i umfasst einen Resonator 301 der Länge L, welcher durch einen vorderen teildurchlässigen Spiegel 302 und einen hinteren teildurchlässigen Spiegel 303 begrenzt wird. Der Messlichtstrahl 103i wird durch Licht gebildet, das durch den vorderen Spiegel 302 aus dem Resonator 301 in Richtung der Oberfläche 104 austritt. Die Länge der Strecke, die der Messlichtstrahl 103 zwischen dem Resonator 301 bzw. dem vorderen Spiegel 302 und der Oberfläche 104 zurücklegt, wird mit $L_0$ bezeichnet. An der Oberfläche 104 wird der Messlichtstrahl 103i gestreut. Ein Teil des gestreuten Lichts wird als Streulichtstrahl 305 in entgegengesetzte Richtung zu dem Messlichtstrahl 103i zurückreflektiert. Durch die optische Einrichtungen 107i gelangt der Streulichtstrahl 305 in den Resonator 301 und interferiert dort mit dem im Resonator 301 verstärkten Licht.

Bewegen sich der Resonator 301 und die Oberfläche 104 augrund einer Bewegung des Sportlers 101 in Bewegungsrichtung 106 relativ zueinander mit einer Geschwindigkeitskomponente $v_{Li}$ in Richtung des Messlichtstrahls 103, dann erfährt der Streulichtstrahl 305 eine Doppler-Verschiebung. Hierbei handelt es sich um eine Veränderung der Frequenz des Lichts beziehungsweise der Wellenlänge in Abhängigkeit von der genannten Geschwindigkeitskomponente $v_{Li}$. Aufgrund der Rückkopplung des Streulichtstrahls 305 in den Resonator 301 tritt innerhalb des Resonators 301 ein Self-Mixing-Effekt auf. Dies bedeutet, dass es zu einer Modulation der Laserverstärkung kommt, deren Frequenz von der Doppler-Verschiebung des Streulichtstrahls 305 abhängt und damit auch von der beschriebenen Geschwindigkeitskomponente. Die zeitliche Veränderung $\Delta g$ der Laserverstärkung in Abhängigkeit von der Geschwindigkeitskomponente $v_{Li}$ der Relativbewegung zwischen dem Resonator 301 und der Oberfläche 104 in Richtung des Messlichtstrahls 103i wird durch die folgende Gleichung beschrieben:

$$\Delta g = -\frac{\kappa}{L} \cdot \cos\left(4 \cdot \pi \cdot f_0 \cdot v_{Li} \cdot t/c + 4 \cdot \pi \cdot L_0 \cdot f_0/c\right) \qquad (1)$$

Hierin bezeichnet $\kappa$ einen laserspezifischen Kopplungskoeffizienten, der einen Wert zwischen Null und Eins besitzt, $f_0$ die Frequenz des von der Lasereinheit 108i emittierten Lichts, $c$ die Lichtgeschwindigkeit und $t$ die Zeit. Gleichung (1) ergibt sich beispielsweise aus der Theorie des Self-Mixing-Effekts in M.H. Koelink et al., "Laser Doppler velocimeter based on the self-mixing effect in a fibrecoupled semiconductor laser: theory", Applied Optics, Vol. 31, 1992, Seiten 3401-3408.

Die periodische Modulation der Laserverstärkung führt zu einer entsprechenden periodischen Modulation der Intensität des von dem Resonator 301 emittierten Lichts. Aus der Frequenz, mit der sich die gemessene Intensität periodisch verändert, kann die Geschwindigkeitskomponente $v_{Li}$ ermittelt werden. Zur Messung der Intensität des von dem Resonator 301 emittierten Lichts ist die Fotodiode 306 vorgesehen, die Licht erfasst, das durch den hinteren Spiegel 303 aus dem Resonator 301 austritt. Üblicherweise wird eine solche Diode 306 zur Konstanthaltung bzw. Regelung der Intensität des Laserlichts verwendet und ist daher in der Regel bereits Bestandteil der Ausstattung von kommerziell erhältlichen Laserdioden. In der vorliegenden Anwendung wird die Fotodiode 306 mit der Auswerteeinrichtung 110 verbunden, die aus dem zeitlichen Verlauf der gemessenen Intensität die Frequenz der Intensitätsänderungen ermittelt und anhand dieser Frequenz die Geschwindigkeitskomponente $v_{Li}$ bestimmt.

Mittels der Lasereinheiten 108a,b des Sensors 102 können somit Geschwindigkeitskomponenten $v_{Li}$ (i = a,b) ermittelt werden, die von der Auswerteeinrichtung 110 ausgewertet werden, um die Geschwindigkeit $v_{S,x}$ des Sportlers 101 in Bewegungsrichtung 106 zu bestimmen. Insbesondere soll dabei die Geschwindigkeitskomponente der Geschwindigkeit des Sportlers parallel zur Oberfläche 104 ermittelt werden. Beispielsweise aus Figur 1 lassen sich dazu die folgenden Beziehungen ablesen:

$$v_{S,x} = v_{La} \cdot \cos \alpha_a \qquad (2)$$

$$v_{S,x} = v_{Lb} \cdot \cos \alpha_b \qquad (3)$$

Ferner gilt in dem Dreieck, bestehend aus dem Sensor 102 und den beiden Punkten, an denen die Strahlen auf die Oberfläche 104 auftreffen, die folgende Beziehung:

$$\alpha_a + \alpha_b + \gamma = 180° \qquad (4)$$

Mithilfe von Gleichung (4) lässt sich beispielsweise in Gleichung (3) der Winkel $\alpha_b$ ersetzen. Führt man diese Ersetzung durch und setzt die rechten Seiten der Gleichungen (2) und (3) gleich, dann ergibt sich die folgende Gleichung zur Bestimmung des Winkels $\alpha_a$:

$$v_{La} \cdot \cos \alpha_a = v_{Lb} \cdot \cos(180° - \alpha_a - \gamma) \qquad (5)$$

Diese Gleichung lässt sich insbesondere unter Verwendung eines Additionstheorems für die Kosinusfunktion nach dem bei Bewegungen des Sportlers veränderlichen Winkel $\alpha_a$ auflösen. Dabei ergibt sich die Lösung

$$\alpha_a = \arctan \frac{\cos \gamma + v_{La}/v_{Lb}}{\sin \gamma} \qquad (6)$$

Unter Heranziehung von Gleichung (5) ermittelt die Auswerteeinrichtung 110 aus den beiden mittels der Lasereinheiten 108a,b bestimmten Geschwindigkeitskomponenten $v_{La}$ und $v_{Lb}$ nach einer Messung in einem Messzeitpunkt zunächst den Winkel $\alpha_a$. In die Berechnung geht neben den Geschwindigkeitskomponenten $v_{La}$ und $v_{Lb}$ auch der Winkel $\gamma$ zwischen den beiden Messlichtstrahlen 103a,b ein. Dieser wird durch die relative Anordnung der Lasereinheiten 108a,b zueinander bestimmt, die in einer Ausgestaltung fest ist in dieser Ausgestaltung kann der Winkel $\gamma$ als ein Parameter im nichtflüchtigen Speicher der Auswerteeinrichtung 110 gespeichert werden. Nach der Ermittlung des Win-

kels $\alpha_a$ wird die Geschwindigkeit $v_{S,x}$ des Sportlers 101 in dem Messzeitpunkt bestimmt. Dies geschieht vorzugsweise anhand von Gleichung (2). Alternativ könnte es auch vorgesehen sein, zunächst den Winkel $\alpha_b$ anhand einer zu Gleichung (6) analogen Gleichung in der Auswerteeinrichtung 110 zu ermitteln, und sodann unter Verwendung des Winkels $\alpha_b$ mithilfe von Gleichung (3) die Geschwindigkeit $v_{S,x}$ des Sportlers 101 zu bestimmen.

Der zuvor beschriebene Sensor 102 mit zwei Lasereinheiten 108a,b erlaubt es, die Geschwindigkeit des Sportlers 101 mit einer relativ hohen Genauigkeit zu messen, die in den meisten Fällen ausreichend ist. Zu Ungenauigkeiten kann es jedoch insbesondere dann kommen, wenn der Sportler 101 sich derart bewegt, dass der Sensor 102 eine Geschwindigkeitskomponente senkrecht zur Oberfläche 104 aufweist, oder wenn sich die Ebene, in der die Messlichtstrahlen 103a,b angeordnet sind, gegenüber der Oberfläche neigt, d.h., zwischen der Oberfläche 104 und der Ebene kein rechter Winkel besteht. Dies kann etwa der Fall sein, wenn sich der Sportler 101 neigt, weil er sich beispielsweise in eine Kurve legt. Um die Genauigkeit in derartigen Situationen zu verbessern, kann ein Sensor 401 vorgesehen werden, der in der Lage ist, derartige Bewegungen des Sportlers 101 zu berücksichtigen.

In Figur 4 ist der Sensor 401 in einer schematischen Darstellung in einer Skizze in eine Draufsicht von oben dargestellt, so dass die Zeichnungsebene parallel zu der Oberfläche 104 liegt. Der Sensor 401 umfasst drei Lagereinheiten 402a,b,c die mit einer Auswerteeinrichtung 404 verbunden sind. Die Lasereinheiten 402a,b,c sind in der gleichen Weise ausgestaltet wie die Lasereinheiten 108a,b des Sensors 102, und emittieren Messlichtstrahlen 403a,b,c in Richtung der Oberfläche 104, auf der sich der Sportler 101 bewegt. Die Messlichtstrahlen 403a,b,c werden mithilfe von optischen Einrichtungen 405a,b,c, die aus einer Anordnung optischer Linsen bestehen, fokussiert. Innerhalb des Sensors 401 sind die Lasereinheiten 402a,b,c so angeordnet, dass die Messlichtstrahlen 403a,b,c unterschiedliche Richtungen haben. Aus der Interferenz des von der Oberfläche 104 in die Lagereinheiten 402a,b,c zurückgestreuten, eine Doppler-Verschiebung aufweisenden Lichts mit dem Licht in den Resonatoren der Lasereinheiten 402a,b,c, die zu den beschriebenen Intensitätsänderungen des Lasers führen, welche mit Photodioden erfasst werden, können drei Geschwindigkeitskomponenten $w_{Li}$ (i = a,b,c) in der Auswerteeinrichtung 404 bestimmt werden. Ferner können jeweils die Entfernungen bestimmt werden, welche Messlichtstrahlen 403a,b,c zwischen dem Sensor 401 und der Oberfläche 104 zurücklegen, auf der sich der Sportler 101 bewegt. Die drei Lasereinheiten des Sensors 401 sind vorzugsweise zusammen mit der Auswerteeinrichtung 404 in einem Gehäuse enthalten. Die Befestigung des Sensors 401 bzw. des Gehäuses an dem Sportler 101 und/oder an einem Sportgerät des Sportlers 101 kann in derselben Weise erfolgen wie bei dem Sensor 102.

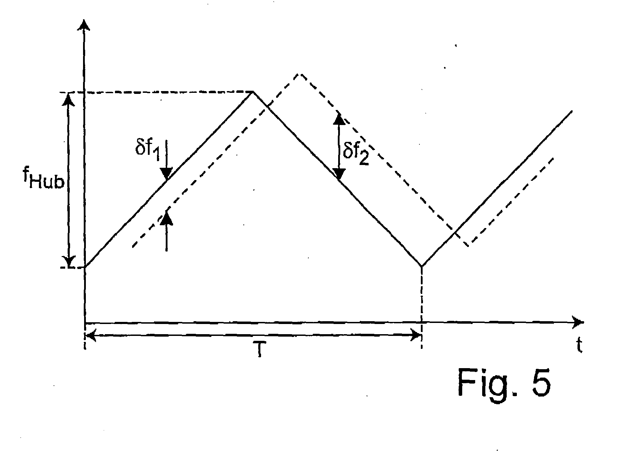

Um mithilfe einer Lasereinheit 402i des Sensors 401 neben der Geschwindigkeitskomponente $w_{Li}$ die Entfernung $d_{Li}$ zu bestimmen, die der zugehörige Messlichtstrahl 403i zwischen der Lasereinheit 402i bzw. dem enthaltenen Resonator und der Oberfläche 104 zurücklegt, wird die Frequenz des ausgesandten Laserlichts nach dem an sich bekannten FMCW-Prinzip moduliert. Die Frequenzmodulation erfolgt durch eine entsprechende Veränderung des durch die Laserdiode fließenden Stroms, die von der Steuerungseinrichtung 406 durchgeführt wird. In einer Ausgestaltung ist eine lineare Modulation nach einer Dreiecksfunktion, wie schematisch in dem Diagramm in Figur 5 anhand der durchgezogenen Linie dargestellt. In dem Diagramm ist die Frequenz $f$ gegenüber der Zeit $t$ aufgetragen. Gegenüber der momentanen Frequenz des Messlichtstrahls 403i ist die Frequenz des zurückreflektierten Signals, deren zeitliches Verlauf in dem Diagramm in Figur 5 anhand der gestrichen Linie dargestellt ist verschoben. Die Frequenzverschiebung $\delta f$ umfasst einen ersten Anteil $f_\tau$ der sich aufgrund der Laufzeit des zurückreflektierten Lichts ergibt und einen zweiten Anteil $f_D$ der auf die Dopplerverschiebung des zurückreflektierten Lichts zurückzuführen ist. Bei ansteigender Frequenz des Messlichtstrahls ergibt sich die Frequenzverschiebung $\delta f$ aus der Differenz des Doppleranteils $f_D$ und des ersten Anteils $f_\tau$, so dass gilt:

$$\delta f_1 = f_D - f_\tau \qquad\qquad (7)$$

Bei sich verringernder Frequenz ergibt sich die Frequenzverschiebung $\delta f$ aus der Summe beider Anteile, d.h., es gilt:

$$\delta f_2 = f_D + f_\tau \qquad\qquad (8)$$

Damit können beide Anteile der Frequenzverschiebung durch eine Auswertung der Differenzfrequenz während ansteigender Frequenz und abnehmender Frequenz ermittelt werden. Es gilt dabei:

$$f_D = \frac{1}{2}\left(\delta f_2 + \delta f_1\right) \qquad (9)$$

$$f_r = \frac{1}{2}\left(df_2 - \delta f_1\right) \qquad (10)$$

Aus den Gleichungen (9) und (10) können mittels der Lasereinheit 402i die Geschwindigkeitskomponente $w_{Li}$ und die Entfernung $d_{Li}$ ermittelt werden. Für die Geschwindigkeitskomponente $v_{Li}$ gilt dabei

$$w_{Li} = -\frac{f_D \cdot \lambda}{2} \qquad (11)$$

wobei mit $\lambda$ die Wellenlänge des emittierten Laserlichts bezeichnet wird, und für die Entfernung $d_{Li}$ gilt:

$$d_{Li} = \frac{f_r \cdot c \cdot T}{4 \cdot f_{Hub}} \qquad (12)$$

wobei $f_{Hub}$ den Frequenzhub bezeichnet, d.h., die Differenz zwischen dem Minimum und dem Maximum der modulierten Frequenz, und $T$ die Periodendauer der Frequenzmodulation.

Zur Auswertung der mittels des Sensors 401 ermittelten Geschwindigkeitskomponenten $w_{Li}$ (i = a,b,c) und der Entfernungen $d_{Li}$ ist es günstig, ein Sensorkoordinatensystem zu betrachten. Bei dem Sensorsystem handelt es sich um ein raumfestes rechtwinkliges Koordinatensystem, dessen Ursprung in einem Messzeitpunkt mit dem Sensor 401 zusammenfällt und das bei der Initialisierung des Systems im Messzeitpunkt eine vorgegebene Lage zum Sensor 401 und insbesondere zu den Messlichtstrahlen 403a,b,c aufweist. Im Folgenden wird davon ausgegangen, dass die Projektion der x-Achse des Sensorsystems auf die Oberfläche 104 in Richtung der zu bestimmenden Geschwindigkeit $v_{S,x}$ des Sportlers 101 zeigt. Um dies zu erreichen, wird der Sensor 401 in geeigneter Weise angebracht. Die z-Achse des Sensorkoordinatensystems zeigt beispielsweise rechtwinklig zur x-Achse nach oben und die y-Achse rechtwinklig zu x-Achse und z-Achse in Bewegungsrichtung des Sportlers 101 nach links. Von dem Sensorkoordinatensystem ist das im Folgenden als horizontiertes Koordinatensystem bezeichnete System zu unterscheiden, dessen Ursprung mit dem Ursprung des Sensorkoordinatensystems zusammenfällt, und das sich aus einer Drehung aus dem Sensorkoordinatensystem ergibt, bei der die xy-Ebene des Sensorsystems parallel zur Oberfläche 104 ausgerichtet wird. Die Geschwindigkeit des Sensors 401 im Sensorkoordinatensystem wird im Folgenden mit $\bar{w}=(w_x,w_y,w_z)$ bezeichnet und die Geschwindigkeit des Sensors 401 im horizontierten Koordinatensystem mit $\vec{w}^h = \left(w_x^h, w_y^h, w_z^h\right)$. Zwischen der Geschwindigkeit $\bar{w}$ bezogen auf das Sensorsystem und der auf das horizontierte System bezogenen Geschwindigkeit $\bar{w}^h$ besteht der folgende Zusammenhang:

$$\bar{w} = S_y(\theta)S_x(\phi)\bar{w}^h \ \text{ bzw. } \ \bar{w}^h = S_y(-\theta)S_x(-\phi)\bar{w} \qquad (13)$$

Hierbei beschreibt die Matrix $S_y(\theta)$ eine Drehung um die momentane y-Achse um den Winkel $\theta$, der im Folgenden auch als Nickwinkel des Sensors 401 bezeichnet wird. Die Matrix $S_x(\phi)$ beschreibt eine Drehung um die momentane x-Achse um den Winkel $\phi$, der im Folgenden auch als Wankwinkel des Sensors 401 bezeichnet wird. Für die Matrizen gilt:

$$S_x(\phi) = \begin{pmatrix} 1 & 0 & 0 \\ 0 & \cos\phi & \sin\phi \\ 0 & -\sin\phi & \cos\phi \end{pmatrix} \quad S_y(\theta) = \begin{pmatrix} \cos\theta & 0 & -\sin\theta \\ 0 & 1 & 0 \\ \sin\theta & 0 & \cos\theta \end{pmatrix} \quad (14)$$

Die Komponente $w_x^h$ wird dabei zumindest näherungsweise mit der zu bestimmenden Geschwindigkeit $v_{S,x}$ des Sportlers identifiziert. Die beiden Geschwindigkeiten unterscheiden sich nur dann, wenn sich der Sensor 401 relativ zu dem Sportler 101 bzw. einem Bezugspunkt des Sportlers 101 bewegt, auf den die Geschwindigkeit des Sportlers 101 bezogen werden soll. Derartige Bewegungen sind jedoch in der Regel vernachlässigbar.

Im Sensorkoordinatensystem können die Richtungen $\bar{n}_i$ der Messlichtstrahlen 403a,b,c jeweils durch Winkel $\varphi_i$ und $\partial_i$ angegeben werden, die sich aus der festen Lage des Sensorsystems in Bezug auf den Sensor 401 ergeben. Dabei ist der Winkel $\partial_i$ der Winkel zwischen einem Messlichtstrahl 403i und der z-Achse des Sensorsystems, und der Winkel $\varphi_i$ ist der Winkel zwischen der x-Achse des Sensorsystems und der Projektion des Messlichtstrahls 403i auf die xy-Ebene des Sensorsystems. Unter Verwendung dieser Winkel gilt für die Richtungen der Messlichtstrahlen 403a,b,c im Sensorkoordinatensystem:

$$\bar{n}_i = \begin{pmatrix} \cos\varphi_i \cdot \sin\vartheta_i \\ -\sin\varphi_i \cdot \sin\vartheta_i \\ \cos\vartheta_i \end{pmatrix} (i = a,b,c) \qquad (15)$$

Die mittels des Sensors 401 gemessenen Geschwindigkeitskomponenten entsprechen den Komponenten der Geschwindigkeit $\bar{w}$ des Sensors 401 entlang dieser Richtungen, d.h., unter Verwendung des Skalarprodukts gilt

$$w_{Li} = \bar{w} \cdot \bar{n}_i \ (i = a,b,c) \qquad (16)$$

Aus den entsprechenden Gleichungen für die drei Geschwindigkeitskomponenten $w_{La}$, $w_{Lb}$ und $w_{Lc}$, die mit den Lasereinheiten 402a,b,c des Sensors 402 ermittelt werden können, ergibt sich ein lineares Gleichungssystem, aus dem in der Auswerteeinrichtung 404 die Komponenten des Geschwindigkeitsvektors $\bar{w} = (w_x, w_y, w_z)$ entlang der drei Achsen des Sensorsystems ermittelt werden können.

Die mithilfe einer Lasereinheit 402i des Sensors 401 ermittelte Entfernung entspricht dem Betrag eines Verbindungsvektors $\bar{d}_{Li}$, zwischen dem Sensor 401 und dem Punkt der Oberfläche 104, an dem der entsprechende Messlichtstrahl 403a,b,c auftrifft. Der Verbindungsvektor ist gegeben durch $\bar{d}_{Li} = d_{Li} \cdot \bar{n}_{Li}$, wobei der Vektor $\bar{n}_{Li}$, wie in Gleichung (15) angegeben, die Richtungen der Messlichtstrahlen 403a,b,c beschreibt. Die drei Verbindungsvektoren $\bar{d}_{La}$, $\bar{d}_{Lb}$ und $\bar{d}_{Lc}$ spannen eine Ebene auf, die der Fahrbahnebene entspricht. Somit kann die Auswerteeinrichtung 404 aus den ermittelten Abständen $d_{La}$, $d_{Lb}$ und $d_{Lc}$ insbesondere die Drehwinkel zwischen der xy-Ebene des Sensorkoordinatensystems und der Fahrbahnebene bestimmen. Diese Drehwinkel entsprechen dem Wankwinkel und dem Nickwinkel des Sensors 401.

In einer Ausgestaltung kann zur Bestimmung der Drehwinkel beispielsweise ein Normaleneinheitsvektor der durch die Messlichtstrahlen 403a,b,c aufgespannten Ebene bestimmt werden. Einen solchen Normaleneinheitsvektor erhält man unter Verwendung des Vektorprodukts beispielsweise durch

$$\vec{H} = \frac{\left(\bar{d}_{Lb} - \bar{d}_{La}\right) \times \left(\bar{d}_{Lc} - \bar{d}_{La}\right)}{\left\|\left(\bar{d}_{Lb} - \bar{d}_{La}\right) \times \left(\bar{d}_{Lc} - \bar{d}_{La}\right)\right\|} \qquad (17)$$

wobei mit $\|\cdot\|$ der Absolutbetrag bezeichnet wird. Der Normaleneinheitsvektor $\bar{H}$ entspricht einem Einheitsvektor des horizontierten Systems in z-Richtung, angegeben im Sensorsystem. Demnach gilt:

$$\bar{e}_z = S_y(-\theta)S_x(-\phi)\bar{H} \tag{18}$$

In dieser Gleichung bezeichnet $\bar{e}_z = (0,0,1)^T$ den Einheitsvektor in z-Richtung im Sensorsystem. Diese Gleichung entspricht einem Gleichungssystem zur Bestimmung des Wankwinkels $\phi$ und des Nickwinkels $\theta$ der Fahrzeugkarosserie 105. Unter Verwendung von $\bar{H}=(h_1,h_2,h_3)$ ergibt sich dabei als Lösung:

$$\phi = \arctan\frac{h_2}{h_3} \tag{19}$$

$$\theta = \arctan\frac{h_1}{\sqrt{1-h_1^2}} \tag{20}$$

In Gleichung (20) ist die x-Komponente von $\bar{H}$ in der physikalischen Einheit einzusetzen, in der die Normierung für $\bar{H}$ durchgeführt worden ist, die beispielsweise in Zentimetern oder Metern erfolgt sein kann.

Auf der Grundlage des mithilfe des Sensors 401 ermittelten Wankwinkels und des ermittelten Nickwinkels kann in einem weiteren Schritt aus der Geschwindigkeit w die Geschwindigkeit $\bar{w}^h$ des Sportlers 101 im horizontierten System in der Auswerteeinrichtung 404 berechnet werden.

In den zuvor beschriebenen Ausgestaltung des Sensors 102, 401 wird die Geschwindigkeit $v_{S,x}$ des Sportlers 101 vorzugsweise in regelmäßigen Zeitabständen bestimmt. Die Zeitabstände ergeben sich dabei aus der Loopzeit der jeweiligen Auswerteeinrichtung 110, 404, d.h. der Dauer eines Loops. Ein Loop umfasst dabei die Bestimmung der Geschwindigkeitskomponenten $v_{La}$ und $v_{Lb}$, bzw. $w_{La}$, $w_{Lb}$ und $w_{Lc}$ in einem Messzeitpunkt aus den Messsignalen der Lasereinheiten 108a,b bzw. 402a,b,c sowie die Bestimmung der Geschwindigkeit $v_{S,x}$ aus den Geschwindigkeitskomponenten. Die Loops werden im Betrieb des Sensors 102, 401 vorzugsweise zyklisch durchlaufen. Die jeweils ermittelte Geschwindigkeit $v_{S,x}$ des Sportlers 101 wird vorzugsweise an einer Ausgabeeinrichtung 109 ausgegeben. Auf diese Weise erhält der Sportler 101 Informationen über seine Geschwindigkeit $v_{S,x}$ in Echtzeit.

Bei der Ausgabeeinrichtung 109 kann es sich um eine visuelle Ausgabeeinrichtung handeln, bei der die Geschwindigkeit an einem Display angezeigt wird, das von dem Sportler 101 abgelesen werden kann. Die Ausgabeeinrichtung 109 kann dabei in das Gehäuse des verwendeten Sensors 102, 401 integriert sein. Je nach Befestigungsort des Sensors 102, 401 kann das Ablesen des Displays in dieser Ausgestaltung jedoch schwierig sein. Daher ist es in einer weiteren Ausgestaltung vorgesehen, dass die visuelle Ausgabeeinrichtung 109 räumlich von dem Sensor 102 getrennt wird, und in der Auswerteeinrichtung 110, 404 des verwendeten Sensors 102, 401 die ermittelte Geschwindigkeit über eine Datenverbindung an die Ausgabeeinrichtung 109 gesendet wird. Die Ausgabeeinrichtung 109 ist in einer Weise ausgestaltet, dass sie von dem Sportler 101 so befestigt werden kann, dass sie einfach ablesbar ist. Beispielsweise kann die Ausgabeeinrichtung 109 als Armbanduhr bzw. als eine an sich bekannte Pulsuhr zur Messung der Herzfrequenz des Sportlers 101 ausgestaltet werden, die der Sportler 101 an einem Handgelenk befestigen kann, oder - falls es sich bei dem Sportler 101 um einen Radfahrer handelt - als eine Anzeigeeinheit, die der Sportler 101 an seinem Fahrrad befestigen kann. Andere Ausgestaltungen der Ausgabeeinrichtung 109, beispielsweise die Anordnung in einer Brille, sind ebenfalls möglich. Bei der Datenverbindung zwischen der Auswerteeinrichtung 110, 404 des Sensors 102, 401 und der Ausgabeeinrichtung 109 handelt es sich vorzugsweise um eine Funkverbindung, so dass keine kabelgebundene Verbindung zwischen dem Sensor 102, 401 und der Ausgabeeinrichtung 109 vorgesehen werden muss. Die Funkverbindung ist vorzugsweise nach einem dem Fachmann an sich bekannten Funkstandard, wie beispielsweise Bluetooth, Wi-Fi, Wireless Local Area Network (WLAN), Near Field Communication (NFC) oder ZigBee ausgestaltet.

In einer Ausführungsform kann als Ausgabeeinheit 109 auch ein bestehendes Gerät des Sportlers 101 verwendet werden, das mit einer Funkschnittstelle ausgestattet ist, beispielsweise ein Mobiltelefon, ein Personal Data Assistent (PDA) ein Musikwiedergabegerät, wie etwa ein portabler CD- oder MP3-Player. Das bestehende Gerät wird mit einer geeigneten Software dazu eingerichtet, über die Funkschnittstelle empfangene, die Geschwindigkeit $v_{S,x}$ des Sportlers 101 repräsentierende Signale an einem Display darzustellen.

Ferner kann alternativ oder zusätzlich zu der visuellen Ausgabeeinrichtung aus eine akustische Ausgabeeinrichtung eingesetzt werden, die einen Kopfhörer umfasst, den der Sportler 101 anlegen kann und über den die jeweils aktuelle Geschwindigkeit $v_{S,x}$ angesagt wird. Darüber hinaus kann es auch vorgesehen sein, dass die ermittelte Ge-

schwindigkeit $v_{S,x}$ des Sportlers 101 zu einer stationären Ausgabeeinrichtung 109 übertragen wird. Diese kann beispielsweise eine Anzeigetafel umfassen, auf der die Geschwindigkeit Zuschauern eines Sportwettkampfs präsentiert wird, an dem der Sportler 101 teilnimmt. Auf diese Weise kann etwa bei einem Skirennen die Geschwindigkeit eines Skiläufers ermittelt und den Zuschauern des Skirennens angezeigt werden.

Darüber hinaus ist es in einer Ausgestaltung vorgesehen, dass die Auswerteeinrichtung 110, 404 des eingesetzten Sensors 102, 401 neben der Geschwindigkeit des Sportlers 101 auch die von dem Sportler zurückgelegte Wegstrecke ermittelt. Dies geschieht vorzugsweise durch eine Integration der ermittelten Geschwindigkeit über die Zeit. Die auf diese Weise bestimmte Wegstrecke kann zusätzlich zu der Geschwindigkeit des Sportlers mittels der Ausgabeeinrichtung 109 ausgegeben werden.

Vorzugsweise erlaubt der Sensor 102 und/oder die Ausgabeeinrichtung 109 zudem die Speicherung der ermittelten Geschwindigkeiten $v_{S,x}$ in Zuordnung zu den jeweiligen Messzeitpunkten und gegebenenfalls eine Speicherung der zurückgelegten Wegstrecke. Ferner ist eine Schnittstelle vorgesehen, um die gespeicherten Daten an eine Einrichtung zur Auswertung der Daten zu übermitteln, insbesondere an einen Personal Computer (PC), der mit einer Software ausgestattet wird. Bei der Schnittstelle kann es sich beispielsweise um eine dem Fachmann an sich bekannte USB-Schnittstelle handeln (USB: Universal Serial Bus)

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihrer Ausführung ergeben sich für den Fachmann aus der vorangegangenen Offenbarung, den Figuren und den Patentansprüchen. In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen. In den Patentansprüchen angegebene Bezugszeichen sind nicht als Beschränkungen der eingesetzten Mittel und Schritte anzusehen.

**Patentansprüche**

1.  Vorrichtung zum Ermitteln der Geschwindigkeit eines Sportlers (101) und/oder Sportgeräts, umfassend

    - wenigstens eine Lasereinheit (108a,b; 402a,b,c) mit einer Lichtquelle zum Emittieren eines kohärenten Messlichtstrahls (103a,b; 403a,b,c) in Richtung einer Oberfläche (104), wenn die Lasereinheit (108a,b; 402a,b,c) an dem Sportler und/oder Sportgerät fixiert ist, und einem Interferenz-Detektor (306), der dazu ausgebildet ist, eine Messgröße zu erfassen, die eine Interferenz zwischen dem an der Oberfläche (104) gestreuten Messlichtstrahl (103a,b; 403a,b,c) und dem Licht der Lichtquelle charakterisiert, und
    - eine Auswerteeinrichtung (110, 404) zum Bestimmen einer Geschwindigkeit des Sportlers (101) in Abhängigkeit von der erfassten Messgröße.

2.  Vorrichtung nach Anspruch 1, wobei es sich bei der Oberfläche (104) um die Oberfläche eines Untergrunds handelt, auf dem sich der Sportler (101) bewegt.

3.  Vorrichtung nach Anspruch 1 oder 2, umfassend eine Sensoreinrichtung (102) mit zwei Lasereinheiten (108a,b), die Messlichtstrahlen (103a,b) in unterschiedliche Richtungen emittieren, wobei die Auswerteeinrichtung dazu eingerichtet ist, die Geschwindigkeit des Sportlers (101) aus den erfassten Messgrößen der Lasereinheiten (108a,b) zu bestimmen.

4.  Vorrichtung nach Anspruch 3, wobei die Auswerteeinrichtung dazu ausgebildet ist, die Geschwindigkeit des Sportlers (101) in Abhängigkeit von der in einer Lasereinheit (108a,b) erfassten Messgröße und einer Winkelgröße ($\alpha_a$, $\alpha_b$) zu ermitteln, die aus den in beiden Lasereinheiten (108a,b) erfassten Messgrößen gewonnen wird und einem Winkel ($\alpha_a$, $\alpha_b$) zwischen wenigstens einem Messlichtstrahl und der Oberfläche charakterisiert.

5.  Vorrichtung nach einem der vorangegangenen Ansprüche, umfassend eine Sensoreinrichtung (401) mit mehreren, insbesondere drei Lasereinheiten (402a,b,c), wobei die Frequenzen des von den Lasereinheiten (402a,b,c) emittierten Lichts nach einem Modulationsschema derart modulierbar sind, dass aus der erfassten Messgröße jeweils eine Entfernung ermittelbar ist, und wobei die Auswerteeinheit (404) dazu ausgebildet ist, basierend auf den ermittelten Entfernungen wenigstens einen Drehwinkel der Sensoreinrichtung (401) relativ zu der Oberfläche (104) zu bestimmen.

**6.** Vorrichtung nach Anspruch 5, wobei die Frequenzen des von den Lasereinheiten (402a,b,c) emittierten Lichts nach einem Modulationsschema derart modulierbar sind, dass aus der erfassten Messgröße jeweils neben der Entfernung eine Geschwindigkeitskomponente der Sensoreinrichtung (401) ermittelbar ist.

**7.** Vorrichtung nach Anspruch 5 oder 6, wobei die Auswerteeinrichtung (401) dazu ausgestaltet ist, basierend auf der Geschwindigkeitskomponente und dem Drehwinkel die Geschwindigkeit des Sportlers (101) zu bestimmen.

**8.** Vorrichtung nach einem der vorangegangenen Ansprüche, wobei die Auswerteeinrichtung (110, 404) dazu ausgebildet ist, durch eine Integration der ermittelten Geschwindigkeit des Sportlers (101) über die Zeit eine von dem Sportler (101) zurückgelegte Wegstrecke zu bestimmen.

**9.** Vorrichtung nach einem der vorangegangenen Ansprüche, wobei die Auswerteeinrichtung mit einer Ausgabeeinrichtung (109) zum Ausgeben der ermittelten Geschwindigkeit des Sportlers (101) und/oder der ermittelten Wegstrecke verbindbar ist.

**10.** Vorrichtung nach Anspruch 9, wobei es sich bei der Verbindung um eine Funkverbindung handelt.

**11.** Vorrichtung nach einem der vorangegangenen Ansprüche, wobei die Lasereinheiten (108a,b; 402a,b,c) und die Auswerteeinheit (110, 404) in einem Gehäuse angeordnet sind, das dazu ausgebildet ist, an dem Sportler (101) und/oder an dem Sportgerät fixiert zu werden.

**12.** Vorrichtung nach einem der vorangegangenen Ansprüche, wobei die Ausgabeeinrichtung (109) eine Anzeigeeinrichtung umfasst sowie ein Befestigungsmittel, mit dem sie im Blickfeld des Sportlers (101) an dem Sportler (101) und/oder dem Sportgerät befestigt werden kann.

**13.** Vorrichtung nach einem der vorangegangenen Ansprüche, wobei die Ausgabeeinrichtung (109) eine stationäre Anzeigeeinrichtung umfasst.

**14.** Sportausrüstung, umfassend eine Vorrichtung nach einem der vorangegangenen Ansprüche.

**15.** Verfahren zum Bestimmen der Geschwindigkeit eines Sportlers (101), bei dem

- aus einer Lichtquelle einer Sensoreinrichtung ein kohärenter Messlichtstrahl (103a,b; 403a,b,c) in Richtung einer Oberfläche (104) ausgesandt wird, der an der Oberfläche reflektiert wird,
- mit einem Interferenz-Detektor (306) eine Messgröße erfasst wird, die eine Interferenz zwischen dem an der Oberfläche gestreuten Messlichtstrahl (103a,b; 403a,b,c) und dem Licht der Lichtquelle charakterisiert, und
- nach Maßgabe der Messgröße eine Geschwindigkeit des Sportlers (101) bestimmt wird.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19914486 C1

**In der Beschreibung aufgeführte Nicht-Patentliteratur**

- **M.H. Koelink et al.** Laser Doppler velocimeter based on the self-mixing effect in a fibrecoupled semiconductor laser: theory. *Applied Optics,* 1992, vol. 31, 3401-3408